# EUROPEAN PATENT APPLICATION

(11) **EP 4 729 146 A2**
(43) Date of publication of application: **22.04.2026**
(21) Application number: 25206237.7
(22) Date of filing: 02.10.2025
(51) Int. Cl.: B01D 29/03, B01D 29/96, B01D 33/04, B01D 33/80, B07B 1/10, B07B 1/28, B07B 1/42, H01M 4/04

(54) **APPARATUS FOR MANUFACTURING ELECTRODE FILMS AND METHOD OF OPERATION FOR THE APPARATUS**

(30) Priority: 17.10.2024 KR 20240142326
(71) Applicant: SAMSUNG SDI CO., LTD., Yongin-si, Gyeonggi-do 17084 (KR)
(72) Inventor: KIM, Sangpil, Yongin-si, Gyeonggi-do 17084 (KR); LEE, Jinhyon, Yongin-si, Gyeonggi-do 17084 (KR); LEE, Gaeon, Yongin-si, Gyeonggi-do 17084 (KR); KIM, Kangmin, Yongin-si, Gyeonggi-do 17084 (KR)
(74) Representative: Michalski Hüttermann & Partner Patentanwälte mbB

(57) **Abstract**

An apparatus for manufacturing a film for an electrode may include a feeder (110) configured to transport mixed powder, a guide chute (120) including a filter portion (150) configured to pass small particles (B) and leave large particles (A) among the powder falling from the feeder (110), and a guide portion (130) that guides the large particles in a given direction, and a rolling roll (140) configured to roll the powder delivered through the guide portion (130).

## Description

### BACKGROUND

### Field

The present disclosure relates to an electrode film manufacturing apparatus, and an operating method of the electrode film manufacturing apparatus.

### Description of Related Art

Unlike primary batteries that are not designed to be (re)charged, secondary (or rechargeable) batteries are typically designed to be discharged and recharged. Low-capacity secondary batteries may be used in portable, small electronic devices such as, e.g., smart phones, feature phones, notebook computers, digital cameras, and camcorders, while large-capacity secondary batteries are widely used as power sources for, e.g., driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The electrode manufacturing process of a secondary battery may include a process of manufacturing an active material in a wet or dry environment. Among these, the process of manufacturing in a dry environment requires a certain level of tensile strength for the initial self-supporting film formed through the initial rolling of the powder in order to go through the subsequent calendaring process. When this is not met, issues such as fracture and tearing or defects may occur during the calendaring process. To address these issues, a method is needed to improve the tensile strength by separating fine particles with low binder content during the process of feeding dry powder into the rolling roll.

The above information disclosed in this Background section is for enhancement of understanding of the background of the present disclosure, and therefore, the above information may include information that does not constitute related (or prior) art.

### SUMMARY

The issues to be addressed by the present disclosure relates to an electrode film manufacturing apparatus that provides a dry manufacturing process for reducing or preventing defects caused by differences in the evaporation rates of solvents that may occur in a wet manufacturing process.

One issue that the present disclosure seeks to address is to provide an electrode film manufacturing apparatus having a mesh portion capable of filtering out powder remaining as fine particles after kneading and crushing of the powder.

In examples, the technical issue to be addressed by the present disclosure is not limited to the above issues, and other issues not mentioned herein, and aspects and features of the present disclosure that would address such issues, are clearly understood by those skilled in the art from the description of the present disclosure below.

According to some example aspects, an apparatus for manufacturing a film for an electrode may include a feeder configured to transport mixed powder, a guide chute including a filter portion configured to pass small particles and leave large particles among the powder falling from the feeder, and a guide portion configured to guide the large particles in a desired direction, and a rolling roll configured to roll the powder delivered through the guide portion.

In examples, the filter portion may include a mesh portion configured to allow the falling powder to reach the mesh portion and be spaced apart at a predetermined or desired angle based on a vertical line "V" to face the powder.

In examples, the filter portion may include a mesh portion configured to be variable within an angle range of about 20 degrees in a direction facing the feeder based on a vertical line "V"

In examples, the apparatus may further include a control unit connected to the feeder and the filter unit, the control unit being configured to control a rotation angle of a rotor connected to a rotation shaft of a mesh portion that filters the powder in the filter portion in response to the feeder transporting the powder to the filter portion, and to control the rotation angle of the rotor to allow the falling powder to hit the mesh portion in a direction orthogonal, or substantially orthogonal, to the mesh portion.

In examples, the filtering portion may include a mesh portion configured to filter the powder to be separated into large particles and small particles, and the mesh portion may have a mesh size of about 85.

In examples, the guide portion may include a guide plate configured to be provided opposite the filter portion and to guide the falling powder toward the filter portion.

In examples, one end of the guide plate may be fixed through an elastic rotation shaft, and the elastic rotation shaft may elastically restore the guide plate to a predetermined or desired angle.

In examples, the apparatus may further include a control unit connected to the feeder and the guide plate, the control unit being configured to control a fixed angle of the guide plate in response to the feeder delivering the powder.

In examples, the filter portion may include a belt-shaped mesh portion configured to separate large particles and small particles from the powder, a pair of rollers configured to be fixed on both sides to generate tension in the mesh portion, a vibrator configured to be positioned at one end of the roller and to transmit a vibration to the mesh portion, and a rotor configured to be positioned at an other end of the roller and to rotate the mesh portion.

In examples, the apparatus may further include a storage unit configured to store the small particles that have passed through the filter portion, a transport unit configured to transport the small particles stored in the storage unit, a mixer configured to receive the small particles by the transport portion, a kneader configured to knead the powder mixed by the mixer, and a crusher configured to crush the powder kneaded by the kneader and deliver the crushed powder to the feeder.

In examples, the apparatus may further include a control unit connected to the transport portion and the storage portion, the control unit being configured to control an operation of the transport portion based on at least one of whether a weight of the small particles stored in the storage portion exceeds a predetermined or desired weight, and a predetermined or desired time interval.

According to some example aspects, a method of operating an apparatus for manufacturing a film for an electrode may include preparing a powder by mixing a plurality of raw materials using a mixer, kneading the powder using a kneader, crushing the kneaded powder using a crusher, supplying the crushed powder to a feeder, filtering the powder by delivering the powder to a guide chute to separate large particles and small particles from the powder by a mesh portion, and rolling the large particles separated from the powder, in which the filtering of the powder may include supplying the small particles separated from the powder to the mixer by a transport portion.

In examples, the small particles may have a width or a diameter of about 300 micrometers or less.

In examples, the filtering of the powder may include controlling an angle of the mesh portion by a control unit connected to the feeder and the mesh portion.

In examples, the filtering of the powder may include controlling an angle of the mesh portion to allow the falling powder to strike the mesh portion in a direction perpendicular, or substantially perpendicular, to the mesh portion, in response to the feeder transporting the powder to the filter.

In examples, the supplying of the small particles to the mixer may include transporting the small particles passing through the filter portion, based on at least one of whether a predetermined or desired weight is exceeded, and a predetermined or desired time interval, by a control unit connected to the transport portion.

In examples, the powder falling from the feeder may be transferred to the mesh portion by the guide plate connected to the guide chute.

In examples, the method may further include rotating the mesh portion by the rotor, in response to the feeder transporting the powder.

In examples, the angle of the mesh portion may be controlled by rotation of a rotor, which is a center of rotation, and the rotor may include a first rotor connected to a lower end of the mesh portion, or a second rotor connected to an upper end of the mesh portion.

Aspects and features of the present disclosure are not limited to the examples described above, and other aspects and features not mentioned are clearly understood by a person skilled in the art from the detailed description below.

### BRIEF DESCRIPTION OF THE DRAWINGS

The above and other embodiments and features of the present disclosure are more apparent by describing in detail example embodiments thereof with reference to the attached drawings, in which:
FIG. 1 is a perspective view illustrating a feeder and guide chute of an electrode film manufacturing apparatus according to one example embodiment of the present disclosure;
FIG. 2 is a drawing illustrating a mesh portion of a guide chute according to one example embodiment of the present disclosure;
FIG. 3 is a drawing illustrating a powder falling into a guide chute including a mesh portion located at the bottom of a rotor according to one example embodiment of the present disclosure;
FIG. 4 is a drawing illustrating a powder falling into a guide chute including a mesh portion positioned at the top of a rotor according to one example embodiment of the present disclosure;
FIG. 5 is a diagram illustrating one or more vibrators connected to a mesh portion according to one example embodiment of the present disclosure;
FIG. 6 is a drawing illustrating a guide plate guiding falling powder according to one example embodiment of the present disclosure;
FIG. 7 is a drawing illustrating a mesh portion according to another example embodiment of the present disclosure;
FIG. 8 is a drawing illustrating a film manufacturing apparatus for an electrode according to one example embodiment of the present disclosure;
FIG. 9 is a conceptual diagram illustrating a control relationship according to one example embodiment of the present disclosure;
FIG. 10 is a drawing illustrating an operation method of an electrode film manufacturing apparatus according to one example embodiment of the present disclosure; and
FIG. 11 is a graph illustrating the results of rolling powder from which fine particles have been removed, powder mixed with fine particles, and powder composed of fine particles, respectively, in an electrode film manufacturing apparatus according to one example embodiment of the present disclosure.

### DETAILED DESCRIPTION

Hereinafter, example embodiments of the present disclosure are described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts \ of the disclosure.

The example embodiments described in this specification and the configurations shown in the drawings are only some of the example embodiments of the present disclosure, and do not represent all of the technical spirit, aspects, and features of the present disclosure. Accordingly, it is understood that there may be various equivalents and modifications that can replace or modify the example embodiments described herein at the time of filing this application.

It is understood that when an element or layer is referred to as being "on," "connected to," or "coupled to" another element or layer, the element or layer may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, and the like, may be exaggerated for clarity of illustration. The same reference numerals designate the same elements. As used herein, the term "and/or" includes any and all combinations of one or more of the associated listed items. Further, the use of "may" when describing example embodiments of the present disclosure relates to "one or more example embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is understood that, although the terms first, second, third, and the like, may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is understood that the spatially relative terms are intended to encompass different orientations of the device in use or operation in addition to the orientation depicted in the figures. For example, when the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing example embodiments of the present disclosure and is not intended to be limiting of the present disclosure. As used herein, the singular forms "a" and "an" are intended to include the plural forms as well, unless the context clearly indicates otherwise. It is further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, and the like, as being "the same" may mean that they are "substantially the same." Thus, the phrase "substantially the same" may include a case having a deviation that is considered low in the art, for example, a deviation of 5% or less. In addition, when a given parameter is referred to as being uniform in a given region, it may mean that the given parameter is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it is understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

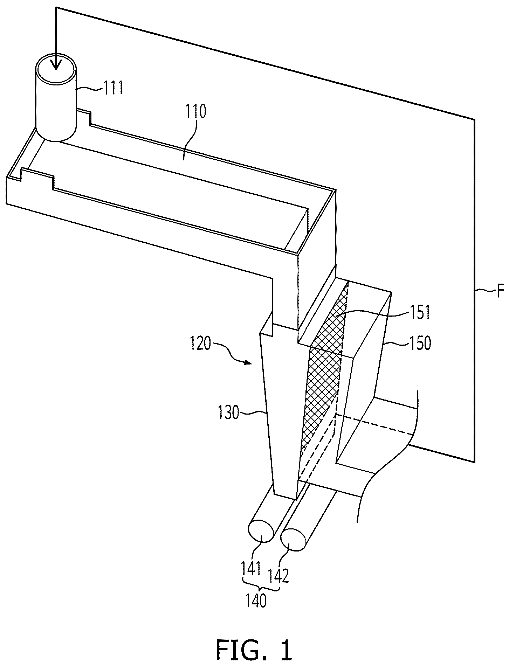

FIG. 1 is a perspective view illustrating a feeder 110 and a guide chute 120 of an electrode film manufacturing apparatus according to one example embodiment of the present disclosure. According to one example embodiment of the present disclosure, an electrode film manufacturing apparatus may be configured to manufacture an electrode for a secondary battery by a dry method. That is, the dry electrode manufacturing apparatus is configured to input dry powder from above the rolling roll 140 to maintain a set level height in the guide chute 120, so that the powder falling from a predetermined or desired height is pressed by the rolling roll 140, so that an electrode member in the form of a film or sheet may be manufactured.

Referring to FIG. 1, the electrode film manufacturing apparatus may include a feeder 110 for transporting mixed powder, a filter portion 150 configured to pass small particles among the powder falling from the feeder 110 and leave large particles, a guide chute 120 including a guide portion 130 for guiding the large particles in a desired direction, and a rolling roll 140 for rolling the powder delivered through the guide portion 130.

Powder provided through the inlet 111 of the feeder 110 may be transported through the feeder 110. The powder being transported may fall downwards. A guide chute 120 may be positioned at the lower side where the powder falls. For example, the space where the powder falls may be the inner space of the guide portion 130 of the guide chute 120. In one example embodiment, one surface of the guide portion 130 may be formed as, or include, a mesh portion 151. The powder may be dropped downwards in the direction of transport by the feeder 110 and by its own weight, and a mesh portion 151 may be positioned on the downward side of the feeder 110.

The mesh portion 151 has a given filtration capacity, and may filter out some of the falling powder and allow the remaining portion to pass. Some of the particles that pass through the mesh portion 151 may be relatively small particles, and some of the particles that are filtered out may be relatively large particles. The small particles may be re-supplied to the feeder 110 along the small particle movement path F. In examples, the criterion for distinguishing small particles from large particles may be determined by the size of the mesh portion 151. The size of the mesh portion 151 may be defined as the number of through holes formed within a tetragonal area formed with about 1 inch in each of the horizontal and vertical directions, and for example, in the case of holes having a diameter and/or width of about 300 micrometers, the mesh portion may be formed with about 85 meshes.

The mesh portion 151 may be included in the filter portion 150. The guide portion 130 and the filter portion 150 are separated by a mesh portion 151, and while small particles may pass through the filter portion 150, large particles may pass through the guide portion 130. The large particles may be filtered by the mesh portion 151 and fall downward, and the guide portion 130 may have a width that narrows downward at a predetermined or desired slope, as illustrated in FIG. 1. Under this configuration, the large particles may be dropped into the space between the first rolling roll 141 and the second rolling roll 142, which are rolling rolls 140 for rolling, through the guide portion 130.

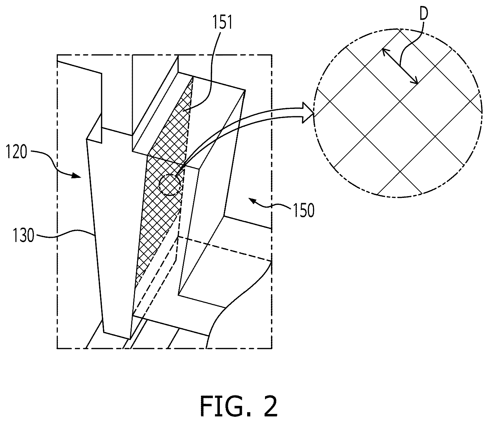

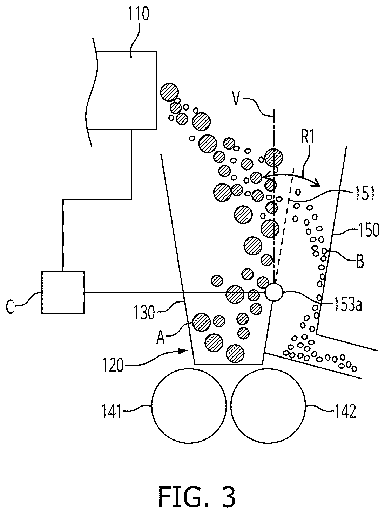

FIG. 2 is a drawing illustrating a mesh portion 151 of a guide chute 120 according to one example embodiment of the present disclosure. Referring to FIGS. 2 and 3, the filter portion 150 includes a mesh portion 151 that filters the powder to allow large particles A to be separated from small particles B, and the mesh portion 151 may be about 85 mesh. In this case, the width D of the through hole may be equal to about 300 micrometers, which may be a criterion for distinguishing large particles from small particles. In this example, particles of about 300 micrometers or less in the powder are referred to as small particles, and particles of more than about 300 micrometers in the powder are referred to as large particles, but the example embodiment is not limited to this example.

Meanwhile, the mesh portion 151 may be positioned at a predetermined or desired angle to effectively separate the falling powder into large particles and small particles. For example, when the direction in which the powder falls is downward to the right, the mesh portion 151 may be arranged to be tilted so that a wider area is exposed toward the upper left, as illustrated in FIG. 3.

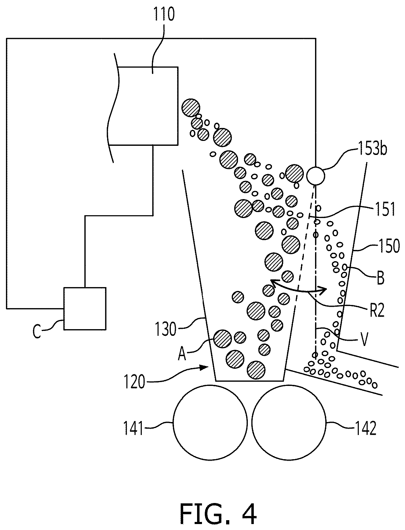

FIG. 3 is a drawing illustrating a powder falling into a guide chute 120 including a mesh portion 151 disposed at the bottom of a first rotor 153a according to one example embodiment of the present disclosure. FIG. 4 is a drawing illustrating a powder falling into a guide chute 120 including a mesh portion 151 located at the top of a second rotor 153b according to one example embodiment of the present disclosure. Referring to FIGS. 3 and 4, the powder, which includes a mixture of small particles B and large particles A, may be dropped from a feeder 110 and provided toward a guide portion 130 and/or a mesh portion 151. Depending on the transport speed of the feeder 110, the distance in the lateral direction of the falling direction may be shortened or lengthened. This allows the powder to reach the mesh portion 151 that is arranged at a predetermined or desired angle from the point of impact, but may not reach the mesh portion 151 when the lateral distance becomes short or long. In order to substantially prevent the powder from reaching the mesh portion 151, the angle of the mesh portion 151 may be configured to be variable.

For example, the filter portion 150 may include a mesh portion 151 that is positioned at a predetermined or desired angle relative to a vertical line "V" so that the falling powder reaches and faces the powder. Furthermore, the mesh portion 151 may be configured to be variable within an angular range of about 20 degrees in a direction facing the feeder 110 with respect to the vertical line "V"

In one example embodiment, a control unit C, which is connected to a feeder 110 and a filter portion 150, may be provided. The control unit C may be configured to control the rotation angle of the rotor 153 connected to the rotation shaft of the mesh portion 151 that filters the powder in the filter portion 150 in response to the feeder 110 transporting the powder to the filter portion 150. For example, the control unit C may be configured to control the rotation angle of the rotor so that the falling powder may hit the mesh portion 151 in a direction orthogonal, or substantially orthogonal, to the mesh portion. That is, the mesh portion 151 is changed at an angle corresponding to the expected drop point of the powder transported by the control unit C, so that at least a part of the falling powder may reach the direction orthogonal to the mesh portion 151.

Referring back to FIG. 3, the angle may be changed by the first rotor 153a that rotates the angle of the mesh portion 151. In the case of the first rotor 153a, the first rotor 153a may be positioned at the bottom of the mesh portion so that the upper end thereof moves forward or backward toward the feeder 110 by changing the angle. Referring to FIG. 3, a variable range that may be varied in a rotation direction of a predetermined or desired angle from a vertical line "V" may be formed through rotation R1.

As another example, referring to FIG. 4, the angle may be changed by a second rotor 153b that rotates the angle of the mesh portion 151. In the case of the second rotor 153b, the second rotor 153b may be positioned at the top of the mesh portion, and the lower end may move forward or backward toward the feeder 110 by changing the angle. Referring to FIG. 4, a variable range that may be varied by a predetermined or desired angle from a vertical line "V" may be formed through rotation R2.

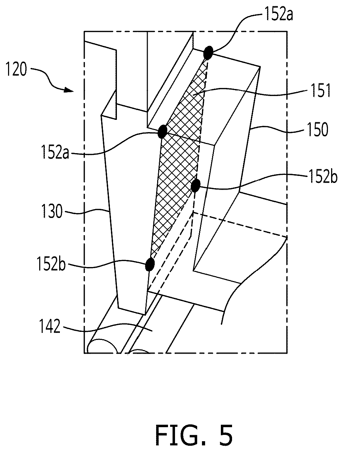

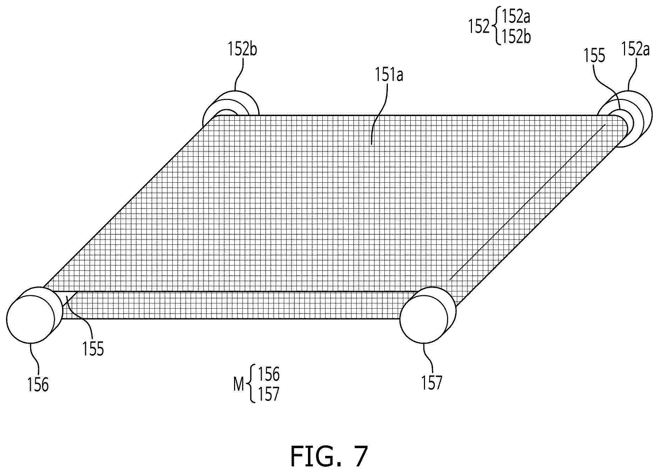

FIG. 5 is a drawing illustrating one or more vibrators 152, illustrated in FIG. 7 as including vibrators 152a and 152b, connected to a mesh portion according to one example embodiment of the present disclosure. Referring to FIG. 5, the filter portion 150 may include a mesh portion 151 that is configured to filter the powder, and vibrators 152a and 152b that are configured to transmit a vibration to the mesh portion 151 while the powder falls on the mesh portion 151. The vibrator 152 may include one or more vibrators such as vibrators 152a and 152b. For example, the vibrator 152 may include one or more first vibrators 152a positioned at the top of the mesh portion 151, and one or more second vibrators 152 positioned at the bottom of the mesh portion 151.

For example, the first vibrator 152a and the second vibrator 152b may be connected to the mesh portion 151, and the first vibrator 152a and the second vibrator 152b may be arranged in a plurality of areas of the mesh portion 151, as shown in FIG. 5, and when all the vibrators operate, vibrations may be generated in different areas of the mesh portion 151. For example, as illustrated in FIG. 5, one first vibrator 152a may be provided at each upper corner of the mesh portion 151, and one second vibrator 152b may be provided at each lower corner of the mesh portion 151.

Under this configuration, when small particles, which fall on the surface of the mesh portion 151 but fail to pass through the mesh portion, are fixed to the surface of the mesh portion 151, the fixed small particles may be induced to pass through the mesh portion through vibration of the mesh portion 151. That is, the mesh portion 151may be designed so that small particles may pass through the mesh portion 151 more effectively.

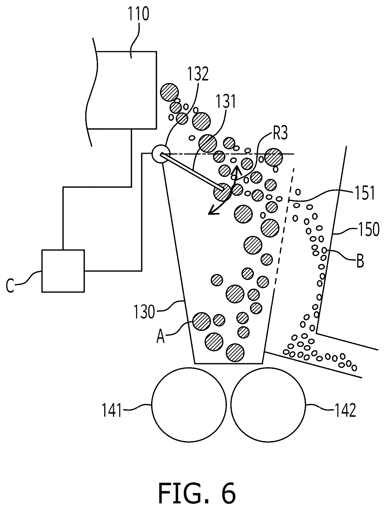

FIG. 6 is a drawing illustrating a guide plate 131 configured to guide falling powder according to one example embodiment of the present disclosure. Referring to FIG. 6, a guide plate 131 that guides powder falling from a feeder 110 toward a mesh portion 151 may be provided on one side of the guide portion 130. For example, one side may be the opposite side wall of the mesh portion 151 from the guide portion 130. When the amount transferred from the feeder 110 is large, the expected area of fall may be large. The guide plate 131 may guide powder, which falls into the inner space of the guide portion 130 beyond the mesh portion 151 of the expected area, to fall toward the mesh portion 151. Separation of large particles A and small particles B from the powder may be effectively performed by substantially preventing the particles from falling onto the rolling roll 140 according to the guidance of the guide portion 130 without passing through the mesh portion 151 by the guide plate 131.

The guide plate 131 is arranged to be inclined downward, but may be positioned so as to face the mesh portion 151. The angle of arrangement may be set at an angle at which the guide plate 131 faces the mesh portion 151. To this end, the angle of the guide plate 131 may be set within an angle range facing the mesh portion 151 through rotation R3 of the guide plate. For example, one end of a guide portion 130 connected to one end of a guide plate 131 is fixed via an elastic rotation shaft 132, and an elastic rotation shaft 132 may be configured to elastically restore the guide plate 131 to a preset angle. In the case of elastic restoration, even when a large amount of powder falls on the upper surface of the guide plate 131, the powder may be transferred to the mesh portion 151 during the process of spreading out due to its own weight and elastically restoring to the original position according to the rotation direction.

Additionally, the elastic rotation shaft 132 is connected to the control unit C so that the angle set by the control unit C may be changed. That is, the control unit C connected to the feeder 110 and the guide plate 131 may control the fixed angle of the guide plate 131 in response to the feeder 110 delivering the powder. For example, the fixed angle may be set or controlled based on the elastically restored original position.

FIG. 7 is a drawing illustrating a mesh portion 151a according to another example embodiment of the present disclosure. Referring to FIG. 7, the mesh portion 151a may have, e.g., a conveyor belt shape. For example, a belt-shaped mesh portion 151a for separating particles A and small particles B in powder, a pair of rollers 155 fixed on both sides so as to generate tension in the mesh portion 151a, a vibrator 152 positioned at one end of the roller 155 for transmitting a vibration to the mesh portion 151a, and a motor "M" positioned at the other end of the roller 155 and configured to rotate the mesh portion 151a may be provided. A pair of rollers 155 may be disposed on each side of the mesh portion 151a so as to generate tension in the width direction of the mesh portion 151a, and a motor "M" may be provided at each end to rotate the mesh portion 151a. The rotor 153 may have a first motor 156 positioned on one of the pair of rollers 155, and a second motor 157 positioned on the other roller of the pair of rollers 155.

In examples, a vibrator 152 is provided on the other end of the roller 155 to transmit a vibration to the mesh portion 151 through the roller 155. For example, the vibrator 152 is positioned such that the first vibrator 152a is positioned on one roller 155 of a pair of rollers 155, and the second vibrator 152b is positioned on the other roller of the pair of rollers 155, so that the first vibrator 152a and the second vibrator 152b may generate vibrations in different areas of the mesh portion 151.

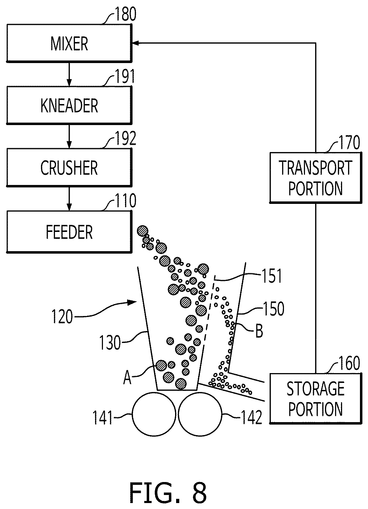

FIG. 8 is a drawing illustrating an electrode film manufacturing apparatus, according to one example embodiment of the present disclosure. Referring to FIG. 8, the electrode film manufacturing apparatus may include a storage portion 160 that is configured to store small particles B that have passed through a filter portion 150, a transport portion 170 that is configured to transport the small particles B stored in the storage portion 160, a mixer 180 that is configured to receive the small particles B by the transport portion 170, a kneader 191 that is configured to knead the powder mixed by the mixer 180, and a crusher 192 that is configured to crush the powder kneaded by the kneader 191 and to transport the crushed powder to a feeder 110. The small particles B separated from the large particles A by the mesh portion 151 may be stored in the storage portion 160. In the storage portion 160, small particles B may be stored for a predetermined or desired period of time, or may be transferred to the mixer 180 by a transport portion 170 immediately after storage.

The transport portion 170 may be or include a pump that is configured to transport small particles B upward by pressure. The mixer 180 may be configured to supply powder from the outside and mix or stir the powder. During the stirring process, small particles B transferred by the transport portion 170 may also be stirred. The stirred powder may be kneaded by a kneader 191, crushed by a crusher 192, and then dropped into a guide chute 120 through a feeder 110. For example, the small particles B in the powder may pass through the mesh portion 151 and pass, e.g., sequentially pass, through the storage portion 160 and the transport portion 170 to thereby be re-supplied to the mixer 180.

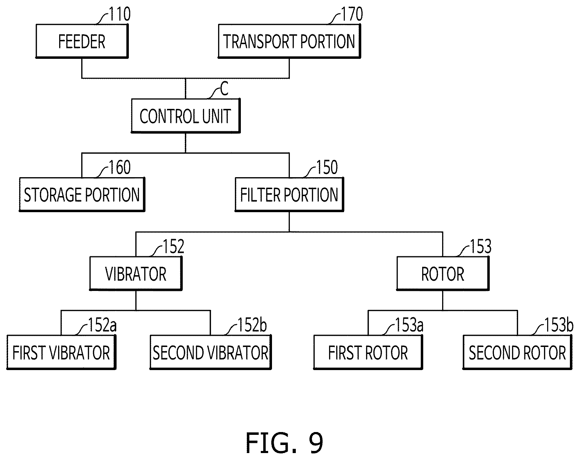

FIG. 9 is a conceptual diagram illustrating a control relationship according to one example embodiment of the present disclosure. Referring to FIG. 9, a control unit C may be connected to at least some components included in an electrode film manufacturing apparatus, and may be configured to control the corresponding components. For example, when the control unit C is connected to the transport portion 170 and the storage portion 160, the transport portion 170 may be controlled to operate based on at least one of whether the small particles B stored in the storage portion 160 exceed a predetermined or desired weight, and a predetermined or desired time interval. That is, the transport portion 170 may periodically transfer the small particles B stored in the storage portion 160 at predetermined or desired time intervals, and when a predetermined or desired amount is recovered, the small particles B may be transferred by the transport portion 170. This control may be performed by a control unit C connected to a storage portion 160 and configured to control the transport portion 170.

For example, the control unit C connected to the feeder 110 and the filter portion 150 may be configured to control the filter portion 150 according to the amount and/or the transport speed, and the like, of powder transported by the feeder 110. For example, angles and/or vibrations may be applied to the mesh portion 151 by the control unit C. The filter portion 150 includes a mesh portion 151 connected to a vibrator 152 and a rotor 153, and the control unit C controls the vibrator 152 and the rotor 153 so that the mesh unit 151 may effectively separate small particles B from the powder. In an example, the rotation angle of the rotor 153 may be controlled by the control unit C to correspond to the amount of powder and to the transfer speed transported by the feeder 110. For example, the control unit C is connected to the feeder 110 and the aforementioned guide plate 131 with reference to FIG. 6, and may set the angle of the guide plate 131 based on the amount, the transport speed, and the like, of powder transported by the feeder 110.

For example, the vibrator 152 may include a first vibrator 152a and a second vibrator 152b, and the rotor 153 may include a first rotor 153a and a second rotor 153b.

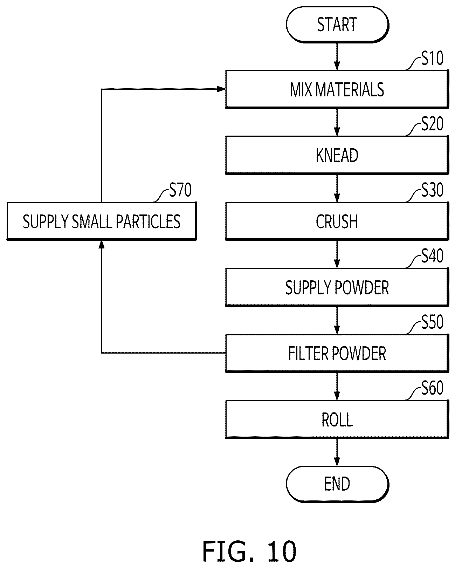

FIG. 10 is a drawing illustrating a method of operation of an electrode film manufacturing apparatus according to one example embodiment of the present disclosure. Referring to FIG. 10, the method of operation may include an operation S10 of preparing powder by mixing a plurality of raw materials with a mixer 180 as illustrated in FIG. 8, an operation S20 of kneading the powder with a kneader, an operation S30 of crushing the powder kneaded in the kneading operation with a crusher, and an operation S40 of supplying the powder crushed in the crushing operation to a feeder. In addition, the operation method may further include an operation S50 of filtering the powder by delivering the powder to a guide chute to separate the powder into large particles and small particles by a mesh portion, and an operation S60 of rolling the large particles separated from the powder. The operation of filtering the powder (S50) may include an operation of supplying small particles separated from the powder by a transport portion to a mixer (S70).

In one example embodiment, the small particles are less than or equal to about 300 micrometers in width and/or diameter, and when the particles are greater than about 300 micrometers in width and/or diameter, the particles may be distinguished as large particles A. The operation of filtering the powder S50 may include an operation of controlling the angle of the mesh portion by a control unit connected to the feeder and the mesh portion. For example, the operation of filtering the powder (S50) may include an operation of controlling the angle of the mesh portion so that the falling powder hits the mesh portion in a direction perpendicular, or substantially perpendicular, to the mesh portion in response to the feeder transporting the powder to the filter portion. Here, the direction perpendicular or orthogonal to the mesh portion may refer to a substantially orthogonal direction, or a direction within an angle range set in advance from the direction orthogonal to the mesh portion.

In examples, in the operation of filtering the powder S50, the mesh portion may be rotated by the rotor in response to the feeder transporting the powder. For example, the angle of the mesh portion is controlled by the rotation of the rotor, which is the center of rotation, and the rotor may include a first rotor connected to the lower end of the mesh portion and/or a second rotor connected to the upper end of the mesh portion.

The operation S70 of supplying to the mixer 180 may further include an operation of transporting the small particles that have passed through the filter portion based on at least one of whether a predetermined or desired weight is exceeded, or a predetermined or desired time interval, by a control unit connected to the transport portion. According to one example embodiment of the present disclosure, powder falling from a feeder may be transferred to a mesh portion by a guide plate connected to a guide chute.

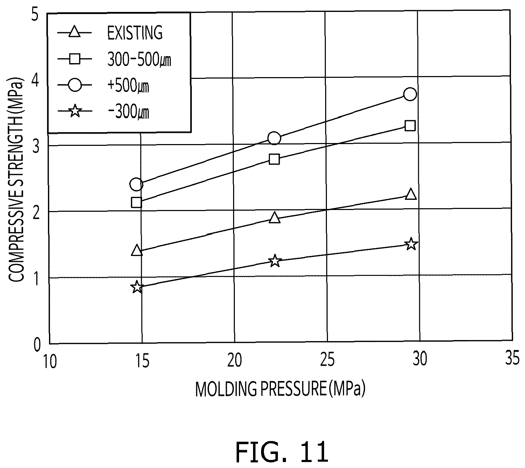

FIG. 11 is a graph illustrating the results of rolling powder from which small particles B have been removed, powder mixed with small particles B, and powder composed of small particles B, respectively, according to one example embodiment of the present disclosure. The dry method applies compression and shear force to powder, which is obtained by mixing active materials, binders, and conductive materials without using a solvent, through a kneading process, to thereby fiberize Poly Tetra Fluoro Ethylene (PTFE), which is mainly used as a binder, so that the active materials and conductive materials may be entangled, and bonding strength may be developed.

These dry powders may be crushed to have a certain particle size distribution. In this case, depending on the degree of PTFE fiberization, the active material and conductive material particles are strongly bound together and formed in a large particle form, and the active material and conductive material particles that are not properly affected by the binder effect are separated and formed in a small particle form, which may cause a difference in particle size. Therefore, in the process of supplying the dry powder to the rolling roll through the feeder, the strength of the self-supporting film may be improved by separating the fine particles with low binding force in advance.

Referring to FIG. 11, in order to verify the strength increase effect, the crushed dry powder was divided into three sections by particle size, sieved, and then formed into cylindrical briquettes to measure the compressive strength thereof. The comparative results show that the powder composed of small particles B of about 300 micrometers or less has a relatively low compressive strength. On the other hand, the powder composed of particles A of about 500 micrometers or more is formed with high compressive strength. Powders composed of particles between about 300 micrometers and about 500 micrometers in size were found to have intermediate compressive strength. That is, when a powder composed of only the large particles A is rolled and used, the effect of increasing strength may be expected.

Although the present disclosure has been described above with respect to example embodiments thereof, the present disclosure is not limited thereto. Various modifications and variations can be made thereto by those skilled in the art within the spirit of the present disclosure and the equivalent scope of the appended claims.

## Claims

1. An apparatus for manufacturing a film for an electrode, the apparatus comprising:
a feeder (110) configured to transport mixed powder, wherein the mixed powder comprises small particles (B) and large particles (A);
a guide chute (120) including a filter portion (150) and a guide portion (130), the filter portion (150) being configured to pass the small particles (B) and leave the large particles (A) among the mixed powder falling from the feeder (110), and the guide portion (130) being configured to guide the large particles (A) in a desired direction; and
a rolling roll (140) configured to roll the large particles (A) delivered through the guide portion (130).

2. The apparatus as claimed in claim 1, wherein the filter portion (150) comprises a mesh portion (151), the mesh portion (151) being arranged with respect to the feeder (110) such that the falling powder reaches the mesh portion (151).

3. The apparatus as claimed in claim 2, wherein the mesh portion (151) is arranged tilted at a desired angle with respect to a vertical line (V) defined by the direction of gravity to face the powder and/or wherein the mesh portion (151) is configured to be variable within an angle range of 20 degrees with respect to the vertical line (V) defined by the direction of gravity in a direction facing the feeder (110).

4. The apparatus according to any of claims 2 or 3, wherein the mesh portion (151) is configured to filter the powder, and wherein the apparatus further includes a vibrator (152) configured to transmit a vibration to the mesh portion (151) when the powder is dropped onto the mesh portion (151).

5. The apparatus according to any of claims 2 to 4, further comprising a control unit (C) connected to the feeder (110) and the filter portion (150),
wherein the control unit (C) is configured to control a rotation angle of a rotor (153) connected to a rotation shaft of the mesh portion (151) that filters the powder in the filter portion (150) in response to the feeder (110) transporting the powder to the filter portion (150), and to control the rotation angle of the rotor (153) to allow the falling powder to hit the mesh portion (151) in a direction orthogonal to the mesh portion (151).

6. The apparatus according to any of claims 2 to 5, wherein the mesh portion (151) is configured to filter the powder to be separated into large particles (A) and small particles (B), and the mesh portion (151) has a mesh size of 85, the mesh size being defined in the dimension standard mesh US.

7. The apparatus according to any of the previous claims, wherein the guide portion (130) includes a guide plate (131) provided opposite the filter portion (150) and configured to guide the falling powder toward the filter portion (150).

8. The apparatus as claimed in claim 7, wherein one end of the guide plate (131) is fixed through an elastic rotation shaft (132), and the elastic rotation shaft (132) is configured to elastically restore the guide plate (131) to a desired angle.

9. The apparatus as claimed in claim 7 or 8, further comprising a control unit (C) connected to the feeder (110) and the guide plate (131),
wherein the control unit (C) is configured to control a fixed angle of the guide plate (131) in response to the feeder (110) delivering the powder.

10. The apparatus according to any of claims 2 to 9, wherein the mesh portion (151) is configured as belt-shaped mesh portion (151a),
the belt-shaped mesh portion (151a) being configured to separate large particles (A) and small particles (B) from the powder;
the apparatus further comprises a pair of rollers (155) configured to be fixed on both sides to generate tension in the mesh portion (151a);
a vibrator (152) configured to be positioned at one end of the roller (155) and to transmit a vibration to the belt-shaped mesh portion (151a); and
a rotor (153) configured to be positioned at an other end of the roller (155) and to rotate the belt-shaped mesh portion (151a).

11. The apparatus according to any of the previous claims, further comprising:
a storage portion (160) configured to store the small particles (B) that have passed through the filter portion (150);
a transport portion (170) configured to transport the small particles (B) stored in the storage portion (160);
a mixer (180) configured to receive the small particles (B) by the transport portion (170);
a kneader (191) configured to knead the powder mixed by the mixer (180); and
a crusher (192) configured to crush the powder kneaded by the kneader (191) and deliver the crushed powder to the feeder (110).

12. The apparatus as claimed in claim 11, further comprising a control unit (C) connected to the transport portion (170) and the storage portion (160),
wherein the control unit (C) is configured to control an operation of the transport portion (170) based on at least one of whether a weight of the small particles (B) stored in the storage portion (160) exceeds a desired weight, and a desired time interval.

13. A method of operating an apparatus for manufacturing a film for an electrode, and preferably for operating an apparatus being configured according to any of the previous claims, the method comprising the steps:
(S10) preparing a powder by mixing a plurality of raw materials using a mixer (180);
(S20) kneading the powder using a kneader (191);
(S30) crushing the kneaded powder using a crusher (192);
(S40) supplying the crushed powder to a feeder (110);
(S50) filtering the powder by delivering the powder to a guide chute (120) to separate large particles (A) and small particles (B) from the powder by a mesh portion (151); and
(S60) rolling the large particles (A) separated from the powder,
wherein the step (S50) filtering of the powder includes the step (S70) supplying the small particles (B) separated from the powder to the mixer (180) by a transport portion (170).

14. The method as claimed in claim 13, wherein the small particles (B) have one of a width and a diameter of 300 micrometers or less.

15. The method as claimed in claims 13 or 14, wherein the step (S50) filtering of the powder comprises controlling an angle of the mesh portion (151) by a control unit (C) connected to the feeder (110) and the mesh portion (151).
